# EUROPEAN PATENT APPLICATION

(11) **EP 4 677 985 A1**
(43) Date of publication of application: **14.01.2026**
(21) Application number: 24751624.8
(22) Date of filing: 23.05.2024
(51) Int. Cl.: A01C 7/20

(54) **NUMERICAL-CONTROL INTELLIGENT AIR-SUCTION SEED METERING DEVICE**

(30) Priority: 07.05.2024 CN 202410551529
(71) Applicant: Shijiazhuang Oushen Agricultural Machinery Co., Ltd., Shijiazhuang, Hebei 052560 (CN)
(72) Inventor: ZHAO, Zhanzhong, Shijiazhuang, Hebei 052560 (CN); ZHANG, Yongsheng, Shijiazhuang, Hebei 052560 (CN); ZHANG, Yuce, Shijiazhuang, Hebei 052560 (CN); TIAN, Heyuan, Shijiazhuang, Hebei 052560 (CN)
(74) Representative: Eisenführ Speiser
(86) International application number: PCT/CN2024/094814
(87) International publication number: WO 2025/231934

(57) **Abstract**

An intelligent numerical control air-suction seed metering device is provided, and relates to the technical field of air-suction seed metering devices. The intelligent numerical control air-suction seed metering device includes a front housing, a rear housing, a seed metering plate, an internal fan, a direct drive motor and a single intelligent seed-metering controller. The front housing is provided with a seed inlet, a seed metering port and an air inlet, and the internal fan is arranged on the rear housing. Seed suction ports are formed in the seed metering plate, a seed filling chamber is formed between the seed metering plate and the front housing, and a negative pressure chamber is formed between the seed metering plate and the internal fan. The seed metering plate is connected with a transmission intermediate wheel. The direct drive motor includes a stator core and multiple magnets, the stator core is fixed on an outer wall surface of a fixed cylinder, and the magnets are fixed on the transmission intermediate wheel. According to the intelligent numerical control air-suction seed metering device, the seed metering device is directly driven by an internal motor, so that the seed metering device is more stable and precise in operation. The speed of the internal fan can be adjusted in real time by the single intelligent seed-metering controller according to seeding requirements and crop types, so that the seed metering device can reach the most suitable negative-pressure suction, the precise seeding rate of a single seed metering device is adjusted, and the purpose of improving the seeding accuracy is reached.

## Description

### TECHNICAL FIELD

The present disclosure relates to the technical field of air-suction seed metering devices, in particular to an intelligent numerical control air-suction seed metering device.

### BACKGROUND

Seeding is an important link in agriculture, and the quality of seeding is going to affect the emergence rate in the future. With the development of modem technology, the technical level of the seeder has also been further improved. In particular, the existing precision seeder has the advantages such as saving of fine seeds, no need for thinning seedlings, uniform distribution of plants in precision seeding fields, rational close planting and improvement on growth in the seedling stage. At the same time, precision seeding also has the effects of saving time and energy and increasing production. Therefore, precision seeding has become the major trend at present.

The main factor affecting the quality of the precision seeder depends on the performance of the seed metering device. That is to say, the seed metering device is the heart of the entire seeder. The traditional seed metering devices are roughly divided into mechanical seed metering devices and pneumatic seed metering devices. The mechanical seed metering devices are divided into indented wheel type seed metering devices, vertical disc type seed metering devices, horizontal disc type seed metering devices, inclined disc type seed metering devices, finger clip type seed metering devices and other seed metering devices. The pneumatic seed metering devices are mainly divided into air suction type seed metering devices, air blowing type seed metering devices and pneumatic seed metering devices. At present, the air suction type seed metering device has important development prospects in China since the device is low in seed damage rate, stable in seed metering, more adaptable to the shape and specific gravity of seeds, and suitable for seeding various types of crops.

The air suction type seed metering device includes a negative pressure chamber and a seed filling chamber. The negative pressure chamber in the air suction type seed metering device on the traditional seeder is connected to the same main pipe through branch pipes, and the main pipe is connected to the fan. The fan is usually driven by power equipment on the seeder, such as a diesel engine. Due to the structure, firstly, a large number of pipeline structures on the seeder occupy a large volume; secondly, the negative pressure suction of the seed metering device is difficult to adjust, and the negative pressure suction is varying due to the different rotational speeds of the diesel engine in the starting stage and the normal driving stage of the seeder; and thirdly, the negative pressure suction cannot be adjusted and adapted to different crop seeds in real time, finally resulting in difficulty in controlling the precision seeding rate.

Therefore, it is necessary to develop an air-suction seed metering device which is simple in structure and convenient for control of precision seeding rate.

### SUMMARY

The present disclosure aims to provide an intelligent numerical control air-suction seed metering device so as to solve the problems in the prior art. The seed metering device is directly driven by an internal motor, and the power loss of traditional land wheel transmission is reduced, so that the seed metering device is more stable and precise in operation and simpler in structure. The speed of an internal fan can be adjusted in real time by a single intelligent seed-metering controller according to seeding requirements and crop types, so that the seed metering device can reach the most suitable negative-pressure suction, the precise seeding rate of a single seed metering device is adjusted, and the purpose of improving the seeding accuracy is reached.

In order to realize the above-mentioned purpose, the present disclosure provides the following scheme. The present disclosure provides an intelligent numerical control air-suction seed metering device, including a front housing, a rear housing, a seed metering plate, an internal fan, a direct drive motor and a single intelligent seed-metering controller. The front housing is provided with a seed inlet, a seed metering port and an air inlet, a fixed cylinder with openings at both ends of the fixed cylinder is coaxially arranged inside the rear housing, and the internal fan is arranged inside the fixed cylinder, where an inner side port of the fixed cylinder is a fan air inlet, and an outer side port of the fixed cylinder is a fan air outlet; seed suction ports are formed in the seed metering plate along a circular track, a seed filling chamber is formed between the seed metering plate and the front housing, and a negative pressure chamber is formed between the seed metering plate and the internal fan; an end of the seed metering plate is connected with a transmission intermediate wheel, and the transmission intermediate wheel and the fixed cylinder are connected through a bearing; the direct drive motor includes a stator core and multiple magnets, the stator core is fixed on an outer wall surface of the fixed cylinder, a winding is wound on the stator core, the multiple magnets are fixed on an inner wall surface of the transmission intermediate wheel to be opposite to the stator core, and polarities of the magnets are alternated; and the single intelligent seed-metering controller is electrically connected with the internal fan and the direct drive motor, and can control the rotational speeds of the internal fan and the direct drive motor.

Preferably, a clamping slot in an L shape is formed on an outer circumferential wall surface of an end of the transmission intermediate wheel, one edge of the L shape is arranged along an axial direction of the transmission intermediate wheel, and an end of the one edge is connected with the outer circumferential wall surface of the end of the transmission intermediate wheel, and an other edge of the L shape is arranged along a circumferential direction of the transmission intermediate wheel; and an inner circumferential wall surface of the end of the seed metering plate is provided with a convex column, the convex column is configured to be clamped into the clamping slot along a radial direction of the seed metering plate.

Preferably, a closed air grinding block is also fixed inside the negative pressure chamber, and an end face of the closed air grinding block is attached to an inner wall surface of the seed metering plate and located on the circular track of the seed suction ports; and the closed air grinding block is located over the seed metering port.

Preferably, a partition plate is fixed on an inner surface of an end of the front housing, a seed metering channel is formed between the partition plate and a side wall of the front housing, and the seed metering port is located at a bottom of the seed metering channel; and the closed air grinding block is located at a top of the seed metering channel.

Preferably, the internal fan includes a centrifugal impeller, a fan drive motor in transmission connection with the centrifugal impeller, and a negative-pressure sensor.

Preferably, an inner wall surface of the fixed cylinder is provided with a fixed plate, and the fixed plate is arranged between the centrifugal impeller and the seed metering plate; and the fan air inlet is arranged at a center of the fixed plate.

Preferably, a cover plate is detachably arranged at the fan air outlet, and an air leakage hole is formed in the cover plate; and the fan drive motor is fixed at a central position of an inner side of the cover plate.

Preferably, the intelligent numerical control air-suction seed metering device also includes a seed scraper and a deflection motor, the seed scraper includes a connecting plate, the connecting plate is hinged to the front housing through a hinge bolt, front and rear ends of the hinge bolt are respectively provided with a front blade and a rear blade, and gaps are formed between the front blade and a surface of the seed metering plate and between the rear blade and the surface of the seed metering plate; under natural states, along the circular track of the seed suction ports, the front blade is located on an outer side of the circular track, and the rear blade is located on an inner side of the circular track; along a rotation direction of the seed metering plate, the front blade is located in front of the rear blade, and a front edge of the front blade is gradually inclined downwards and transitionally connected with a lower edge of the front blade along a circular arc; a front edge of the rear blade is gradually inclined upwards and transitionally connected with an upper edge of the rear blade along a further circular arc; and the deflection motor is fixed on an outer end face of the front housing, an output shaft of the deflection motor extends into the front housing and is fixedly provided with an eccentric wheel, and the eccentric wheel is located in a strip-shaped hole in an end of the connecting plate.

Preferably, the intelligent numerical control air-suction seed metering device also includes a precise seeding counting sensor and a seed suction port counting sensor which are fixed on the front housing, where the precise seeding counting sensor is configured for detecting a number of the seed suction ports into which seeds are not sucked, and the precise seeding counting sensor is located behind the seed scraper along the rotation direction of the seed metering plate; the seed suction port counting sensor is arranged behind the closed air grinding block, and is configured for monitoring a seeding speed and providing basic parameters for the precise seeding counting sensor and the single intelligent seed-metering controller; the single intelligent seed-metering controller is electrically connected with the precise seeding counting sensor, the seed suction port counting sensor and the deflection motor; and the single intelligent seed-metering controller is electrically connected with a main controller of a seeder through RS485.

Preferably, an isolation hood is fixed on the inner side of the cover plate, and the single intelligent seed-metering controller is located inside the isolation hood.

Compared with the prior art, some embodiments have the following technical effects.

Firstly, an internal fan is provided in each seed metering device separately. A negative pressure is generated directly by using the internal fan to replace the structural form in the prior art that one fan simultaneously loads multiple seed metering devices on the seeder, so that the power loss of the traditional seeder traction equipment is reduced, the traditional fan and the pipeline structure connected to the fan are also canceled, and the structure is simpler.

Secondly, the speed of the internal fan can be adjusted in real time by a single intelligent seed-metering controller according to seeding requirements and crop types, so that the seed metering device can reach the most suitable negative-pressure suction, the precise seeding rate of a single seed metering device is adjusted, and the purpose of improving the seeding accuracy is reached.

Thirdly, the direct drive motor is arranged on the outer side of the fixed cylinder. The seed metering plate is directly driven by the direct drive motor to rotate. The seed metering device is more stable in operation without transmission mechanisms such as a speed reducer. The internal fan and an exhaust channel are arranged on the inner side of the fixed cylinder, so that the structure of the seed metering device is extremely compact, the volume of the seed metering device is reduced, and the seed metering device is more convenient to mount and transport.

Other technical effects obtained by the present disclosure are described below in combination with specific embodiments.

### BRIEF DESCRIPTION OF THE DRAWINGS

To more clearly illustrate the present embodiment of the present disclosure or the technical scheme in the prior art, the following briefly introduces the attached figures to be used in the present embodiment. Apparently, the attached figures in the following description show merely some embodiments of the present disclosure, and those skilled in the art may still derive other drawings from these attached figures without creative efforts.
FIG. 1 is an overall structural schematic diagram of an air-suction seed metering device in the present disclosure.
FIG. 2 is a rear view of an air-suction seed metering device in the present disclosure.
FIG. 3 is a side section view of an air-suction seed metering device in the present disclosure.
FIG. 4 is an exploded view of an air-suction seed metering device in the present disclosure.
FIG. 5 is an internal structural schematic diagram of an air-suction seed metering device.
FIG. 6 is an assembly structural schematic diagram of a seed metering plate, a transmission intermediate wheel and a bearing.
FIG. 7 is a side section view of FIG. 6.
FIG. 8 is a structural schematic diagram of a front housing.
FIG. 9 is a structural schematic diagram of a rear housing.
FIG. 10 is a structural schematic diagram of a seed metering plate.
FIG. 11 is a structural schematic diagram of an internal fan.
FIG. 12 is a structural schematic diagram of a transmission intermediate wheel.
FIG. 13 is a structural schematic diagram of a deflection motor matching with a seed scraper.
FIG. 14 is a structural exploded view of FIG. 13.
FIG. 15 is a structural schematic diagram of a precise seeding counting sensor.

### Reference signs:

1 front housing; 11 seed inlet; 12 seed metering port; 13 air inlet; 14 partition plate; 15 seed metering channel;
2 rear housing; 21 fixed cylinder; 22 fan air outlet; 23 arc-shaped groove; 24 fixed plate; 25 second bulged end; 26 fan air inlet;
3 seed metering plate; 31 seed suction port; 32 circular plate; 33 cylinder; 34 convex column;
4 centrifugal impeller; 41 front end plate; 42 rear end plate; 43 arc-shaped vane; 44 first bulged end;
5 stator core; 51 arc-shaped bulge;
6 transmission intermediate wheel; 61 magnet; 62 inner ring; 63 outer ring; 64 clamping slot; 65 ball roller;
7 seed filling chamber;
8 negative pressure chamber;
9 fan drive motor;
10 cover plate; 101 air leakage hole;
110 seed filling hopper;
120 seed scraper; 121 front blade; 122 rear blade; 123 connecting plate; 124 hinge bolt; 125 strip-shaped hole;
130 closed air grinding block;
140 deflection motor; 141 tooth; 142 eccentric wheel; 143 fixed sheet; 144 fastening bolt; 145 output shaft; 146 inner threaded hole;
150 precise seeding counting sensor;
160 seed suction port counting sensor;
170 isolation hood; and
180 single intelligent seed-metering controller.

### DETAILED DESCRIPTION OF THE EMBODIMENTS

The following clearly and completely describes the technical scheme in the embodiments of the present disclosure with reference to the embodiments of the present disclosure. Apparently, the described embodiments are merely a part rather than all of the embodiments of the present disclosure. Based on the embodiment in the present disclosure, all other embodiments acquired by the ordinary technical staff in the art under the premise of without contributing creative labor belong to the scope protected by the present disclosure.

The present disclosure aims to provide an intelligent numerical control air-suction seed metering device so as to solve the problems in the prior art. The seed metering device is directly driven by an internal motor, and the power loss of traditional land wheel transmission is reduced, so that the seed metering device is more stable and precise in operation and simpler in structure. The speed of an internal fan can be adjusted in real time by a single intelligent seed-metering controller according to seeding requirements and crop types, so that the seed metering device can reach the most suitable negative-pressure suction, the precise seeding rate of a single seed metering device is adjusted, and the purpose of improving the seeding accuracy is reached.

To make the foregoing objective, features and advantages of the present disclosure clearer and more comprehensible, the present disclosure is further described in detail below with reference to the attached figures and specific embodiments.

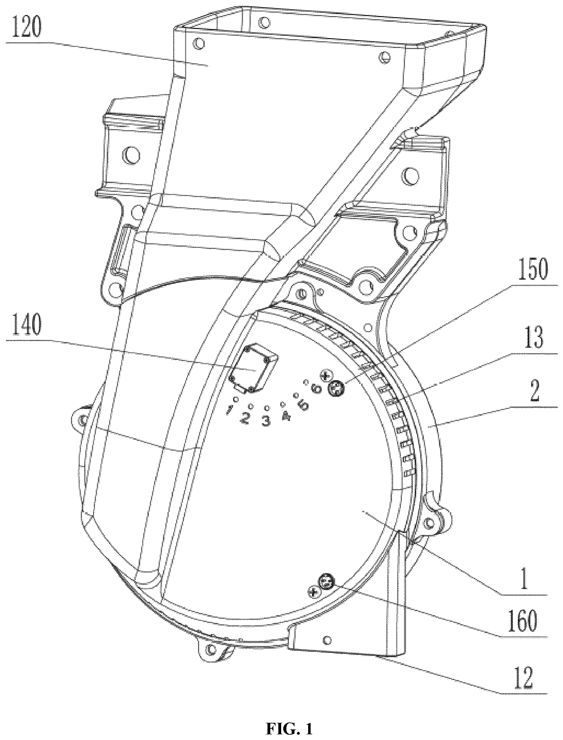

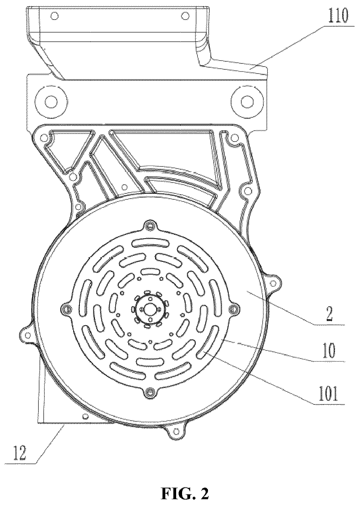

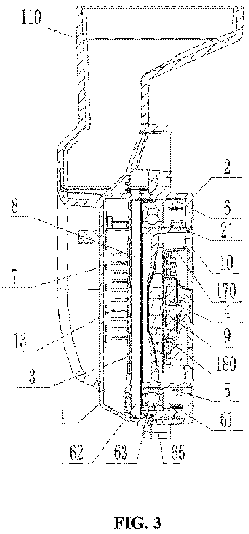

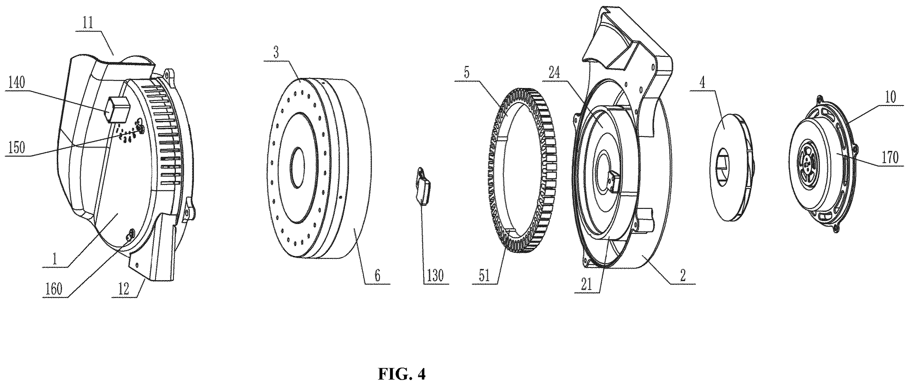

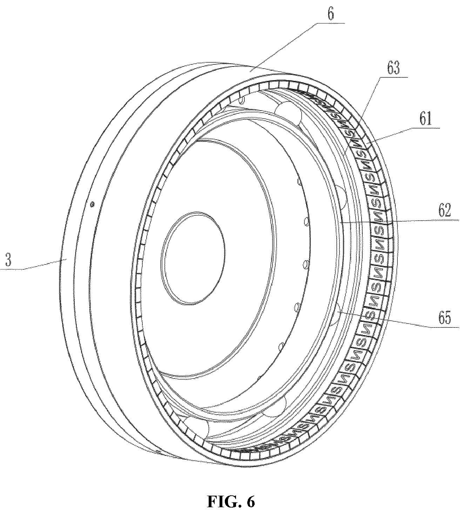

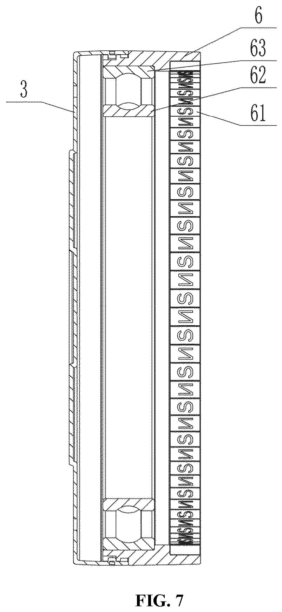

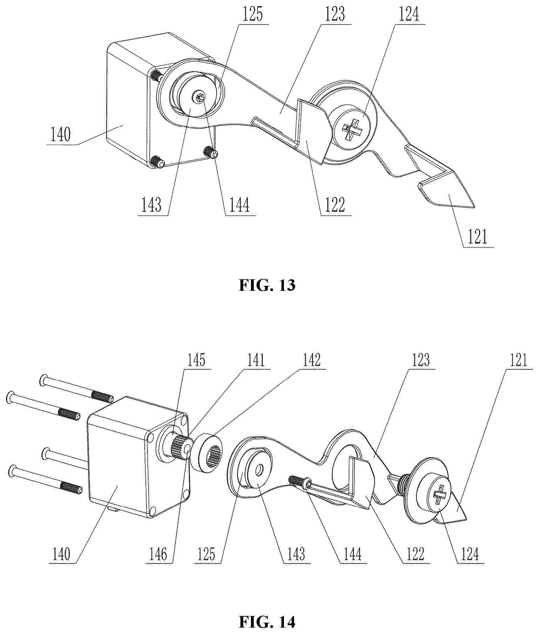

As shown in FIG. 1 to FIG. 15, the embodiment provides an intelligent numerical control air-suction seed metering device. The intelligent numerical control air-suction seed metering device includes a front housing 1, a rear housing 2, a seed metering plate 3, an internal fan, a direct drive motor and a single intelligent seed-metering controller 180, where the shape of the front housing 1 is matched with that of the rear housing 2, and the front housing 1 and the rear housing 2 are detachably connected through bolts after being coupled. The front housing 1 is provided with a seed inlet 11, a seed metering port 12 and an air inlet 13. A fixed cylinder 21 with openings at both ends of the fixed cylinder 21 is coaxially arranged on an end face of the rear housing 2, and the internal fan is arranged inside the fixed cylinder 21. An inner side port (the inner side refers to the side close to the front housing 1) of the fixed cylinder 21 is a fan air inlet 26, and an outer side port of the fixed cylinder 21 is a fan air outlet 22. A seed filling chamber 7 is formed between the seed metering plate 3 and the front housing 1, and a negative pressure chamber 8 is formed in the area between the seed metering plate 3 and the internal fan. Moreover, the rotational speed of the internal fan in the embodiment is adjustable, and the rotational speed can be adjusted according to the sizes of different seeds so as to provide corresponding negative-pressure suction. A gap is formed between a circumferential side wall of the seed metering plate 3 and a circumferential inner wall of the front housing 1. The size of the gap is smaller than that of seeds to be seeded, so the problem that seeds are clamped into the gap cannot occur. An end of the seed metering plate 3 is connected with a transmission intermediate wheel 6, and the transmission intermediate wheel 6 and the fixed cylinder 21 are connected through a bearing. The direct drive motor includes a stator core 5 and multiple magnets 61. The stator core 5 is fixed on an outer wall surface of the fixed cylinder 21. A winding is wound on the stator core 5. The magnets 61 are fixed on an inner wall surface of the transmission intermediate wheel 6 to be opposite to the stator core 5, and the polarities of the magnets 61 are alternated. The single intelligent seed-metering controller 180 is electrically connected with the internal fan and the direct drive motor, so that the rotational speeds of the internal fan and the direct drive motor can be adjusted.

When in use, seeds are filled into the seed filling chamber 7 through the feed inlet 11. The stator iron core 5 is energized to generate a variable magnetic field to drive the magnets 61 to rotate together with the transmission intermediate wheel 6, and the seed metering plate 3 rotates synchronously with the transmission intermediate wheel 6. The internal fan is energized and rotates to exhaust air, so that a negative pressure is formed in the negative pressure chamber 8, and the seeds in the seed filling chamber 7 are adsorbed on seed suction ports 31. With the rotation of the seed metering plate 3, the seeds adsorbed on the seed suction ports 31 fall off over the seed metering port 12, so that the seeding is achieved.

First of all, in the embodiment, an internal fan is configured in each seed metering device separately. A negative pressure is generated directly by using the internal fan to replace the structural form in the prior art that one fan simultaneously loads multiple seed metering devices on the seeder, so that the power loss of the traditional seeder traction equipment is reduced, the traditional fan and the pipeline structure connected to the fan are also canceled, and the structure is simpler. Then, in the embodiment, the speed of the internal fan can be adjusted in real time by the single intelligent seed-metering controller 180 according to seeding requirements and crop types, so that the seed metering device can reach the most suitable negative-pressure suction, the precise seeding rate of a single seed metering device is adjusted, and the purpose of improving the seeding accuracy is reached. Moreover, in the embodiment, the direct drive motor is arranged on the outer side of the fixed cylinder 21. The seed metering plate 3 is directly driven by the direct drive motor to rotate. The seed metering device is more stable in operation without transmission mechanisms such as a speed reducer. The internal fan and an exhaust channel are arranged on the inner side of the fixed cylinder 21, so that the structure of the seed metering device is extremely compact, the volume of the seed metering device is reduced, and the seed metering device is more convenient to mount and transport.

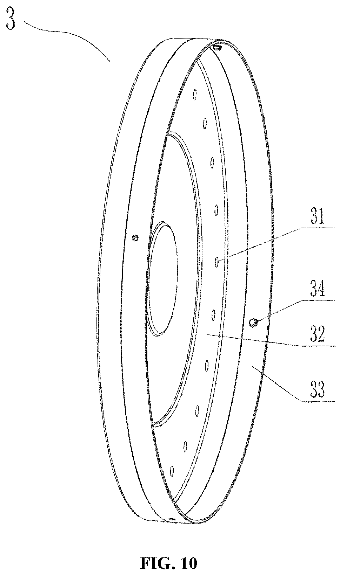

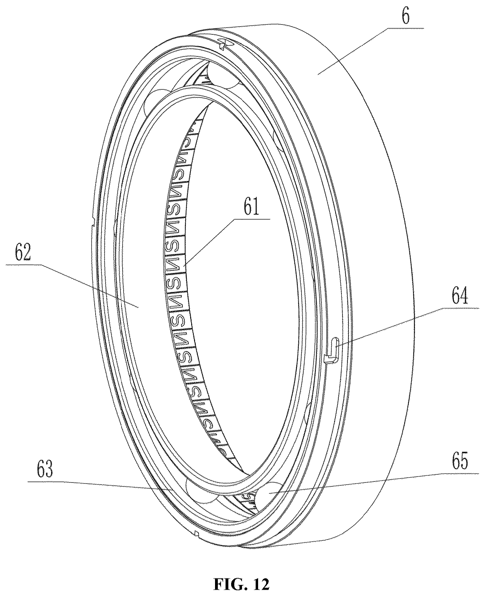

As shown in FIG. 10 and FIG. 12, in the embodiment, a clamping slot 64 in an L shape is formed on an outer circumferential wall surface of an end of the transmission intermediate wheel 6. One edge of the L shape is arranged along the axial direction of the transmission intermediate wheel 6, and an end of the one edge is connected with the outer circumferential wall surface of the end of the transmission intermediate wheel 6. The other edge of the L shape is arranged along the circumferential direction of the transmission intermediate wheel 6. The circumferential extension direction of the other edge is opposite to the rotation direction of the transmission intermediate wheel 6. The seed metering plate 3 includes a cylinder 33 and a circular plate 32 connected to one end of the cylinder 33, and the seed suction ports 31 are formed in the circular plate 32. An inner circumferential wall surface of the other end is provided with a convex column 34 which can be clamped into the clamping slot 64 along the radial direction of the seed metering plate 32. The diameter of the convex column 34 is the same as the width of the clamping slot 64. When the seed metering plate 3 is connected with the transmission intermediate wheel 6, the convex column 34 is aligned with the clamping slot 64, and the seed metering plate 3 is buckled on an outer circumferential wall surface of the transmission intermediate wheel 6. When the seed metering plate 3 is pushed to the corner of the clamping slot 64 in the L shape, the seed metering plate 3 rotates along the other side of the clamping slot 64 until the convex column 34 abuts against an end of the clamping slot 64.

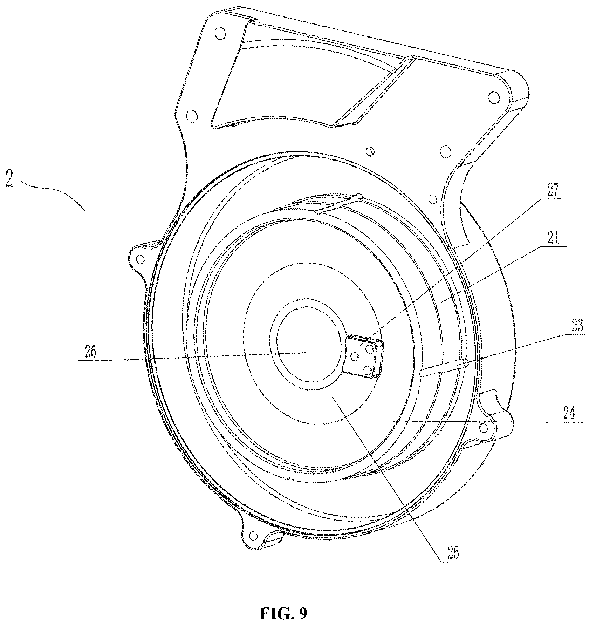

As shown in FIG. 9, in the embodiment, multiple arc-shaped grooves 23 are uniformly formed in an outer wall surface of the fixed cylinder 21 at intervals along the circumferential direction. Multiple arc-shaped bulges 51 are arranged on an inner circumferential wall surface of the stator core 5. When the stator core 5 is mounted, the arc-shaped bulges 51 are aligned with the arc-shaped grooves 23 in a one-to-one correspondence manner, and the stator core 5 is pushed to the bottom of the fixed cylinder 21.

Further, FIG. 12 shows bearing ball rollers 65, an inner ring 62 and an outer ring 63 in the embodiment. The inner ring 62 sleeves the outer wall surface of the fixed cylinder 21, and is in interference fit with the fixed cylinder 21. The outer ring 63 is fixed on an inner wall of the transmission intermediate wheel 6.

In order to drop the seeds from the seed suction ports 31, a closed air grinding block 130 is further fixed inside the negative pressure chamber 8 in the embodiment, and the closed air grinding block 130 is attached to an inner wall surface of the seed metering plate 3 and located on the distribution track of the seed suction ports 31. Although the closed air grinding block 130 and the seed metering port 12 are distributed on both sides of the seed metering plate 3, the closed air grinding block 130 is located over the seed metering port 12 from the front view of the seed metering plate 3, that is, when the seed suction port 31 rotates over the seed metering port 12, the seed suction port 31 is blocked by the closed air grinding block 130, the adsorption force on the seeds on the seed suction port 31 disappears, and the seeds fall from the seed metering port 12 under the action of gravity.

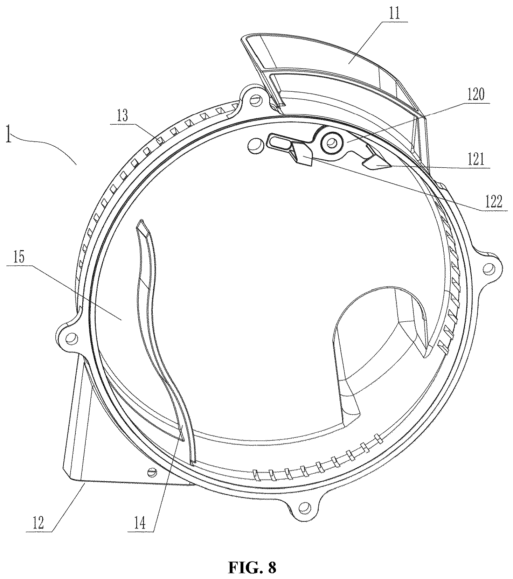

As shown in FIG. 8, in the embodiment, a partition plate 14 is fixed on an inner surface of an end of the front housing 1. A gap is formed between the partition plate 14 and the seed metering plate 3. However, the gap is not larger than the grain size of the seeds, so that the seeds cannot pass through the gap. A seed metering channel 15 is formed between the partition plate 14 and a side wall of the front housing 2, and the seed metering port 12 is formed at the bottom of the seed metering channel 15. The closed air grinding block 130 is located at the top of the seed metering channel 15. When the seed suction port 31 rotates over the seed metering port 12, the seed suction port 31 is plugged by the closed air grinding block 130. The seeds fall into the seed metering channel 15 without adsorption force under the effect of gravity, and finally the seeds can also fall from the seed metering port 12 under the blocking effect of the partition plate 14 even if the fallen seeds are adsorbed again by other seed suction ports 31 unblocked by the closed air grinding block 130.

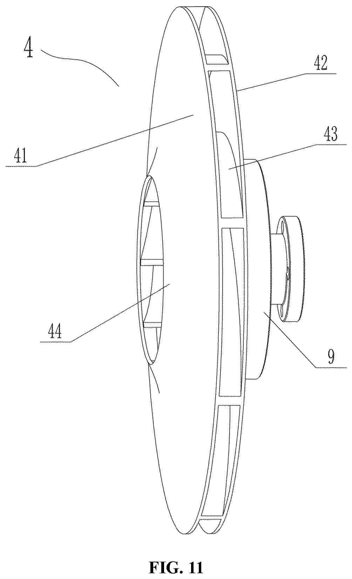

As shown in FIG. 11, the internal fan in the embodiment includes a centrifugal impeller 4, a fan drive motor 9 and a negative-pressure sensor. The negative-pressure sensor is electrically connected with the single intelligent seed-metering controller 180, and is configured for feeding back a negative pressure numeric value inside the negative pressure chamber 8. The centrifugal impeller 4 includes a front end plate 41, a rear end plate 42 and multiple arc-shaped vanes 43 connected between the front end plate 41 and the rear end plate 42. A first bulged end 44 is convexly formed at the middle part of the front end plate 41, and the first bulged end 44 is provided with an opening configured for inlet air; and the rear end plate 42 is connected with the fan drive motor 9.

As shown in FIG. 9, an inner side port of the fixed cylinder 21 is provided with a fixed plate 24, and the fixed plate 24 is arranged between the internal fan and the seed metering plate 3. The middle part of the fixed plate 24 is convex towards the negative pressure chamber 8 to form a second bulged end 25. The shape of the second bulged end 25 fits that of the first bulged end 44. The second bulged end 25 is provided with a fan air inlet 26, and the fan air inlet 26 aligns with an opening in an end of the first bulged end 44. The fixed plate 24 is arranged inside the fixed cylinder 21, so that the volume of the negative pressure chamber 8 can be reduced, the negative pressure effect of the internal fan generated inside the negative pressure chamber 8 is improved, and the adsorption force for the seeds is increased.

The fixed plate 24 is further provided with a mounting base for mounting the closed air grinding block 130.

In the embodiment, a cover plate 10 is detachably arranged at the fan air outlet 22, and an air leakage hole 101 is formed in the cover plate 10; and the fan drive motor 9 is fixed at the central position of the inner side of the cover plate 10.

In order to facilitate to fill seeds into the seed filling chamber 7, the top of the seed inlet 11 is communicated with a seed filling hopper 110 in the embodiment.

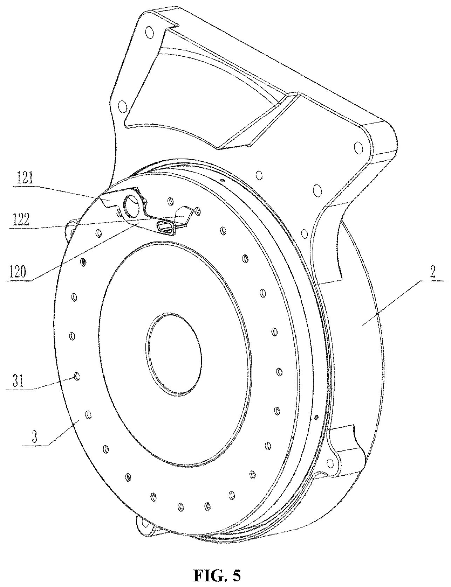

As shown in FIG. 5, FIG. 8, FIG. 13 and FIG. 14, in the embodiment, an inner end face of the front housing 1 is hinged with a seed scraper 120 through a hinge joint 124. Specifically, the seed scraper 120 includes a connecting plate 123, the middle portion of the connecting plate 123 is hinged to the front housing 1 through a hinge bolt 124. On the connecting plate 123, front and rear sides of the hinge bolt 124 are respectively provided with a front blade 121 and a rear blade 122. Gaps are formed between the front blade 121 and the surface of the seed metering plate 3 and between the rear blade 122 and the surface of the seed metering plate 3. The gaps are extremely small, so that a seed with a part thereof located inside the seed suction ports 31 and a part thereof located outside the seed suction ports 31 can be scraped to fall off under the premise of without generating contact friction of the front blade 121 and the rear blade 122 with the surface of the seed metering plate 3. Under natural states, along the circular distribution track of the seed suction ports 31, the front blade 121 is located on the outer side of the circular track, and the rear blade 122 is located on the inner side of the circular track. Along the rotation direction of the seed metering plate 3, the front blade 121 is located in front of the rear blade 122, and a front edge of the front blade 121 is gradually inclined downwards and transitionally connected with a lower edge of the front blade 121 along circular arc. A front edge of the rear blade 122 is gradually inclined upwards and transitionally connected with an upper edge of the rear blade 122 along circular arc. A deflection motor 140 is fixed on the top of an inner end face of the front housing 1, an output shaft 145 of the deflection motor 140 extends into the front housing 1 and is fixedly provided with an eccentric wheel 142, and the eccentric wheel 142 is located in a strip-shaped hole 125 in an end of the connecting plate 123. The width of the strip-shaped hole 125 is equal to the diameter of the eccentric wheel 142. The output shaft 145 is connected with the eccentric wheel 142 through teeth 141. Specifically, an outer cylinder surface of the output shaft 145 of the deflection motor 140 is provided with the teeth 141, and an axial inner threaded hole 146 is formed in the central part of the output shaft 145. The fastening bolt 144 is screwed into the inner threaded hole 146 through a fixed sheet 143, and the eccentric wheel 142 is pressed by the fixed sheet 143. When in use, the deflection motor 140 rotates to swing the seed scraper 120 by the eccentric wheel 142 so as to adjust the shielding area of the front blade 121 and the rear blade 122 of the seed scraper 120 to the seed suction port 31 and change the wind force of the seed suction port 31. At the same time, the positions of the seeds can be guided due to inclined structures of the ends of the front blade 121 and the rear blade. A part of the seeds adsorbed by the seed suction port 31 are pushed towards the central position of the seed suction port 31 to ensure the area where the seeds are affected by the adsorption force. When multiple seeds are adsorbed by the seed suction ports 31, excess seeds can be pushed to the sides of the seed suction ports 31 through pushing and guiding effects of the front blade 121 or the rear blade 122 to the seeds, so that the seeds fall off without the adsorption force, and the purpose of precise seeding is achieved.

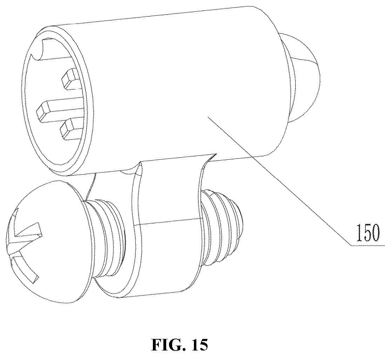

As shown in FIG. 1 and FIG. 15, in order to realize intelligent control for the seed metering device, a precise seeding counting sensor 150 and a seed suction port counting sensor 160 are arranged on the front housing 1 by screws in the embodiment. The precise seeding counting sensor 150 is configured for detecting the number of the seed suction ports 31 into which seeds are not sucked, and the precise seeding counting sensor 150 is located behind the seed scraper 120 along the rotation direction of the seed metering plate 3. The seed suction port counting sensor 160 is arranged behind the closed air grinding block 130, and is configured for monitoring the seeding speed and providing basic parameters for the precise seeding counting sensor 150 and the single intelligent seed-metering controller 180. The intelligent numerical control air-suction seed metering device further includes a single intelligent seed-metering controller 180. The single intelligent seed-metering controller 180 is electrically connected with the precise seeding counting sensor 150, the seed suction port counting sensor 160 and the fan drive motor 9. The single intelligent seed-metering controller 180 adjusts the rotational speed of the internal fan and the rotation angle of the deflection motor 140 according to miss-seeding quantity and precise seeding quantity to reach the purpose of intelligent adjustment and improvement on precise seeding rate.

Thus, in the embodiment, the followings can be realized by arranging the single intelligent seed-metering controller 180 in combination with other structures.

Firstly, the rotational speed of the internal fan is automatically adjusted according to the specific gravity of seeded crop seeds, so that the purposes of no rebroadcasting and no miss broadcasting is achieved.

Secondly, the angle of the seed scraper 120 is automatically adjusted according to the data fed back by the precision seeding counting sensor 150 and the seed suction port counting sensor 160, so that the purpose of precision seeding is achieved.

Thirdly, the single intelligent seed-metering controller 180 has independent computing power, and transmits data with the main controller of the seeder in two directions by RS485 communication, so that the disadvantages that lines are too complicated and failures are prone to occur are avoided.

Further, an isolation hood 170 is fixed on the inner side of the cover plate 10, and the single intelligent seed-metering controller 180 is located inside the isolation hood 170.

Adaptive changes made according to actual requirements are all within the protection range of the present disclosure.

It needs to be noted that for those skilled in the art, obviously the present disclosure is not limited to the details of the exemplary embodiment, and the present disclosure can be achieved in other specific forms without departing from the spirit or essential characteristics of the present disclosure. Therefore, for every point, the embodiments should be regarded as exemplary embodiments and are unrestrictive, the scope of the present disclosure is restricted by the claims appended hereto, and therefore, all changes, including the meanings and scopes of equivalent elements, of the claims are aimed to be included in the present disclosure. Any mark of attached figures in the claims should not be regarded as limitation to the involved claims.

## Claims

1. An intelligent numerical control air-suction seed metering device, comprising a front housing, a rear housing, a seed metering plate, an internal fan, a direct drive motor and a single intelligent seed-metering controller,
the front housing is provided with a seed inlet, a seed metering port and an air inlet, a fixed cylinder with openings at both ends of the fixed cylinder is coaxially arranged inside the rear housing, and the internal fan is arranged inside the fixed cylinder, wherein an inner side port of the fixed cylinder is a fan air inlet, and an outer side port of the fixed cylinder is a fan air outlet;
seed suction ports are formed in the seed metering plate along a circular track, a seed filling chamber is formed between the seed metering plate and the front housing, and a negative pressure chamber is formed between the seed metering plate and the internal fan; an end of the seed metering plate is connected with a transmission intermediate wheel, and the transmission intermediate wheel and the fixed cylinder are connected through a bearing; the direct drive motor comprises a stator core and a plurality of magnets, the stator core is fixed on an outer wall surface of the fixed cylinder, a winding is wound on the stator core, the plurality of magnets are fixed on an inner wall surface of the transmission intermediate wheel to be opposite to the stator core, and polarities of the magnets are alternated; and
the single intelligent seed-metering controller is electrically connected with the internal fan and the direct drive motor.

2. The intelligent numerical control air-suction seed metering device according to claim 1, wherein a clamping slot in an L shape is formed on an outer circumferential wall surface of an end of the transmission intermediate wheel, one edge of the L shape is arranged along an axial direction of the transmission intermediate wheel, and an end of the one edge is connected with the outer circumferential wall surface of the end of the transmission intermediate wheel, and an other edge of the L shape is arranged along a circumferential direction of the transmission intermediate wheel; and an inner circumferential wall surface of the end of the seed metering plate is provided with a convex column, the convex column is configured to be clamped into the clamping slot along a radial direction of the seed metering plate.

3. The intelligent numerical control air-suction seed metering device according to claim 1, wherein a closed air grinding block is also fixed inside the negative pressure chamber, and an end face of the closed air grinding block is attached to an inner wall surface of the seed metering plate and located on the circular track of the seed suction ports; and the closed air grinding block is located over the seed metering port.

4. The intelligent numerical control air-suction seed metering device according to claim 3, wherein a partition plate is fixed on an inner surface of an end of the front housing, a seed metering channel is formed between the partition plate and a side wall of the front housing, and the seed metering port is located at a bottom of the seed metering channel; and the closed air grinding block is located at a top of the seed metering channel.

5. The intelligent numerical control air-suction seed metering device according to claim 1, wherein the internal fan comprises a centrifugal impeller, a fan drive motor in transmission connection with the centrifugal impeller, and a negative-pressure sensor.

6. The intelligent numerical control air-suction seed metering device according to claim 5, wherein an inner wall surface of the fixed cylinder is provided with a fixed plate, and the fixed plate is arranged between the centrifugal impeller and the seed metering plate; and the fan air inlet is arranged at a center of the fixed plate.

7. The intelligent numerical control air-suction seed metering device according to claim 6, wherein a cover plate is detachably arranged at the fan air outlet, and an air leakage hole is formed in the cover plate; and the fan drive motor is fixed at a central position of an inner side of the cover plate.

8. The intelligent numerical control air-suction seed metering device according to claim 7, wherein the intelligent numerical control air-suction seed metering device also comprises a seed scraper and a deflection motor, the seed scraper comprises a connecting plate, the connecting plate is hinged to the front housing through a hinge bolt, front and rear ends of the hinge bolt are respectively provided with a front blade and a rear blade, and gaps are formed between the front blade and a surface of the seed metering plate and between the rear blade and the surface of the seed metering plate; under natural states, along the circular track of the seed suction ports, the front blade is located on an outer side of the circular track, and the rear blade is located on an inner side of the circular track; along a rotation direction of the seed metering plate, the front blade is located in front of the rear blade, and a front edge of the front blade is gradually inclined downwards and transitionally connected with a lower edge of the front blade along a circular arc; a front edge of the rear blade is gradually inclined upwards and transitionally connected with an upper edge of the rear blade along a further circular arc; and the deflection motor is fixed on an outer end face of the front housing, an output shaft of the deflection motor extends into the front housing and is fixedly provided with an eccentric wheel, and the eccentric wheel is located in a strip-shaped hole in an end of the connecting plate.

9. The intelligent numerical control air-suction seed metering device according to claim 8, also comprising a precise seeding counting sensor and a seed suction port counting sensor which are fixed on the front housing, wherein the precise seeding counting sensor is configured for detecting a number of the seed suction ports into which seeds are not sucked, and the precise seeding counting sensor is located behind the seed scraper along the rotation direction of the seed metering plate; the seed suction port counting sensor is arranged behind the closed air grinding block, and is configured for monitoring a seeding speed and providing basic parameters for the precise seeding counting sensor and the single intelligent seed-metering controller; the single intelligent seed-metering controller is electrically connected with the precise seeding counting sensor, the seed suction port counting sensor and the deflection motor; and the single intelligent seed-metering controller is electrically connected with a main controller of a seeder through RS485.

10. The intelligent numerical control air-suction seed metering device according to claim 9, wherein an isolation hood is fixed on the inner side of the cover plate, and the single intelligent seed-metering controller is located inside the isolation hood.
